# EUROPEAN PATENT APPLICATION

(11) **EP 1 840 159 A1**
(43) Date of publication of application: **03.10.2007**
(21) Application number: 05814273.8
(22) Date of filing: 09.12.2005
(51) Int. Cl.: C08J 5/18, C08L 67/00

(54) **OPTICAL BIAXIALLY ORIENTED POLYESTER FILM**

(30) Priority: 20.12.2004 JP 2004367481
(71) Applicant: Mitsubishi Polyester Film Corporation, Tokyo 108-0014 (JP)
(72) Inventor: SATO, Yoshinori c/o Mitsubishi Polyester Film Corp., Tokyo (JP); FURUYA, Ken c/o Central Research Laboratory, Shiga-ken (JP)
(74) Representative: Merkle, Gebhard
(86) International application number: PCT/JP2005/022652
(87) International publication number: WO 2006/067978

(57) **Abstract**

The present invention relates to an optical biaxially oriented polyester film comprising a polyester comprising a main component and at least one other component which is a third component in a total amount of 2.0 to 10.0 mol%, which polyester film has a film haze of 0 to 3.0%. The said optical biaxially oriented polyester film is excellent in optical properties such as transparency, law haze and optical uniformity, is capable of contributing to quality improvement of optical products and reducing energetic consumption, and does not have any irregularity and defect when using for elements of LCD, PDP, organic EL, projection displays, or the like, and is capable of realizing a high level brightness and providing high quality images.

## Description

### TECHNICAL FIELD

The present invention relates to an optical biaxially oriented polyester film, and more particularly, it relates to an optical biaxially oriented polyester film which is used for various optical elements used for a liquid-crystal display (hereinafter sometimes abbreviated as "LCD"), plasma display (hereinafter sometimes abbreviated as "PDP"), or the like; a protective film and release film used in the production process of product in optical arts, and which film is excellent in optical properties and is capable of improving the properties of optical materials and reducing the energetic consumption.

### BACKGROUND ART

Polyester films, especially biaxially oriented polyester films comprising polyethylene terephthalate or polyethylene naphthalate have been extensively used in various applications such as magnetic tapes, ferromagnetic tapes, photographic films, packaging films, films for electronic parts, electrical insulation films, metal laminate films, films attached on the glass surface of glass displays and protective films for various materials because of excellent properties thereof such as mechanical strength, heat resistance, chemical resistance, or the like.

Recently, polyester films have been used for especially various optical films and various uses thereof which are base films of LCD elements such as a prism sheet, a light diffuser sheet, a reflective plate and a touch panel; display antireflective base films; a base film for explosion-proof display; and a film for a PDP filter. In these optical products, in order to attain bright and clear images, it is required for a base film used for the optical film to have excellent transparency in view of use thereof and to have no defect such as foreign matters and scratches which affect the image. In addition, in case of use a polarized light, it is required for attaining even images that there is no unevenness of retardation caused by unevenness of polymer chain orientation and unevenness of film thickness.

A polyester film is usually produced by melt-extruding, quenching and solidifying a polyester material to obtain an amorphous sheet, stretching the amorphous sheet in longitudinal direction and transverse direction to obtain a film, and heat treating the film. In these steps, if the cooling and stretching are not conducted uniformly, the above unevenness of retardation is remained in the film and there arises a problem of deterioration of images when used for optical materials.

Brightness is one of important properties of display. It is known that the used polyester film for the material affects the brightness (refer to Patent Document 1). Especially, in case of attaining high quality images, a high level brightness is required. Therefore, a polyester film capable of realizing the high level images is required. In order to attain this, needless to say, it is required for the polyester film to have a high level transparency, in addition, to have optically effective properties.

Patent Document 1: Japanese Patent Application Laid-Open (KOKAI) No. 2003-201357

### DISCLOSURE OF THE INVENTION

### PROBLEM TO BE SOLVED BY THE INVENTION

The present invention has been made to solve the above problems. An object of the present invention is to provide an optical biaxially oriented polyester film which is capable of having no unevenness and defects, realizing high level brightness and providing high quality images when using for elements of LCD, PDP, organic EL, projection displays, or the like, and excellent in optical properties.

### MEANS FOR SOLVING THE PROBLEM

As a result of the present inventors' earnest study in view of the above problems, it has been found that the above problems can be solved by a biaxially oriented polyester film which comprises a third component other than the main constituting components in a specific amount and which has a specific haze. The present invention has been attained on the basis of this finding.

Thus, in an aspect of the present invention, there is provided an optical biaxially oriented polyester film comprising a polyester comprising a main component and at least one other component which is a third component in a total amount of 2.0 to 10.0 mol%, which polyester film has a film haze of 0 to 3.0%.

### EFFECT OF THE INVENTION

The optical biaxially oriented polyester film according to the present invention is excellent in optical properties such as transparency, low haze and optical even, and is capable of improving the properties of optical materials and reducing the energetic consumption, and capable of having no unevenness and defects, realizing high level brightness; and is capable of providing high quality images when using for elements of LCD, PDP, organic EL, projection displays, or the like, and excellent in optical properties. Therefore, the present invention is very high in the industrial value.

### PREFERRED EMBODIMENTS FOR CARRYING OUT THE INVENTION

The present invention is described in detail below.

The main component constituting a polyester used for the polyester film according to the present invention is obtained by polycondensing an aromatic dicarboxylic acid with an aliphatic glycol. Examples of the aromatic dicarboxylic acid may include terephthalic acid and 2,6-naphthalenedicarboxylic acid. Examples of the aliphatic glycol may include ethyleneglycol, diethyleneglycol and 1,4-cyclohexane dimethanol. Typical examples of the polyester may include polyethylene terephthalate (PET) and polyethylene-2,6-naphthalene dicarboxylate (PEN).

In the present invention, the polyester comprises at least one other component which is a third component in a total amount of 2.0 to 10.0 mol%, preferably 2.5 to 10 mol%, more preferably 3.0 to 8.0 mol%. As the dicarboxylic acid of the above third component, there are exemplified isophthalic acid, phthalic acid, terephthalic acid, 2,6-naphthalenedicarboxylic acid, adipic acid, sebacic acid, and oxycarboxylic acids such as p-oxybenzoic acid. As the glycol of the above third component, there are exemplified ethyleneglycol, diethyleneglycol, triethyleneglycol, propyleneglycol, butanediol, 1,4-cyclohexane dimethanol and neopentylglycol. Of these, diethyleneglycol, triethyleneglycol and 1,4-cyclohexane dimethanol are preferred because the optical unevenness of film due to the polymer orientation and unevenness of film thickness can be effectively diminished, and the film flatness, thermal resistance and dimension stability can be highly maintained. Further, in the present invention, the third component containing in the polyester includes diethylenglycol derived from ethyleneglycol as a by-product at the polymerization.

As a method for containing the above third component in the polyester, there are mentioned a method (1) in which at least one copolyester containing comonomer within the above defined content is used, a method (2) in which at least one copolyester containing comonomer over the above defined content and at least one copolyester containing comonomer under the above defined content are used by blending each other in such a ratio that the above content of third component is totally satisfied, a method (3) in which at least two homopolyesters are used by blending each other in such a ratio that the above content of third component is totally satisfied, or the like.

The polyester according to the present invention can be obtained by such conventional known methods that a method in which dicarboxylic acid is reacted with diol to directly obtain a polyester having a low degree of polymerization, a method in which a lower alkylester of dicarboxylic acid is reacted with a diol in the presence of a known transesterification catalyst and thereafter the polymerization is conducted in the presence of polymerization catalyst. As the catalyst, known catalysts such as antimony compounds, germanium compounds and titanium compounds can be used. In view of diminishing film dullness, it is preferred that the content of antimony compound is zero or not more than 100 ppm as the content of antimony atom.

The polyester used in the present invention may be a polyester obtained by a method in which the above obtained polyester is molded into polyester chips after melt-polymerization, the obtained chips are subject to solid-phase polymerization under heating and reducing pressure or under inert gas stream such as nitrogen gas, if required. The intrinsic viscosity of obtained polyester is usually not less than 0.40 dl/g, preferably 0.40 to 0.90 dl/g.

In the polyester layer of polyester film according to the present invention, particles are added thereto for the main purpose of imparting an easy slip property to the polyester film. The particles blended in the film are not limited as long as having ability of imparting the easy slip property thereto. Concretely, there may be exemplified particles of silica, calcium carbonate, magnesium carbonate, barium carbonate, calcium sulfate, calcium phosphate, magnesium phosphate, silicon dioxide, kaolin, aluminum-oxide and titanium oxide. Further, heat resistant organic particles described in Japanese Patent Publication (KOKOKU) No. 59-5216 and Japanese Patent Application Laid-Open (KOKAI) No. 59-217755 may be used. Examples of heat resistant organic particles other than the above, there may be included heat-curable urea resins, heat-curable phenol resins, heat-curable epoxy resins, benzoguanamine resins, or the like. Further, also there may be used well-dispersed precipitated particles derived from partial metal compounds such as catalyst which are precipitated in the polyester production step.

The shape of particles used is not limited and all shapes of particles such as sphere, bulk, rod-like and flat-shape can be used. Further, there is no limitation in the hardness, density, color, etc. These particles may be used alone or in combination of any two or more kinds thereof. The average diameter of particles is usually 0.01 to 5 µm. When the average diameter of particles is less than 0.01 µm, the particles added tend to be coagulated and the dispersibility of particles may be insufficient. On the other hand, the average diameter of particles is more than 5 µm, the resultant film tends to have a too coarse surface, resulting in poor transparency.

The content of the above particles contained in the polyester is usually 0.0003 to 1.0% by weight, preferably 0.0005 to 0.5% by weight. When the content of particles is less than 0.0003% by weight, the easy slip property of film may not be sufficient. On the other hand, when the content of particles is more than 1.0% by weight, the film transparency may not be sufficient.

In the present invention, the method of blending the particles in the polyester is not particularly limited, and the fine particles may be blended in the polyester by known methods. For example, the particles may be added at an optional stage upon production of the polyester. The particles are preferably added in the form of a slurry obtained by dispersing the particles in ethyleneglycol, etc., at the esterification stage, or at the stage after completion of esterification or transesterification reaction and thereafter the polycondensation reaction is proceeded. Further, there may also be used the method of blending a slurry prepared by dispersing the particles in ethyleneglycol or water, with the raw polyester material using a vented kneading extruder, or the method of blending the dried particles with the raw polyester material using a kneading extruder.

In the polyester film according to the present invention, if required, known additives other than the above particles such as an antioxidant, a thermal stabilizer, a lubricant, an anti-static agent, a fluorescent brightener, a dye and a pigment may be added. According to the case of use, an ultraviolet absorber, especially a benzoxazinone-based ultraviolet absorber, or the like may be added.

The thickness of the polyester film according to the present invention is not particularly limited as long as it is possible to form a film having such a thickness. The thickness of the film is usually 9 to 300 µm, preferably 20 to 250 µm, more preferably 25 to 200 µm.

The film haze of the polyester film according to the present invention is 0 to 3.0%, preferably 0 to 1.5%, more preferably 0 to 1.2%, especially preferably 0 to 1.0%. The polyester film according to the present invention can be widely used for optical uses because of having excellent transparency. When the film haze is more than 3.0%, the polyester film may not be suitable for optical uses.

In case where the polyester film according to the present invention is used for an optical film, especially a polyester film for display, the b* value of color tone measured according to the light transmission method with one film is usually -5 to +3, preferably -4 to +2, more preferably -3.5 to +1. When the b* value exceeds +3, the film may be often unsuitable for an optical film because the yellow tinge is emphasized and the color tone of image is deteriorated when using for a display or the brightness is deteriorated. In polyester films, the b* value is usually not lower than -5. Therefore, when the b* value of color tone of lower than -5 may be attained by using an additive. However, in this case, there may be problems of not only color tone but also bleeding out of additive and reliability for long time using. In order to attain the above color tone, there exemplified a method in which the catalyst and catalyst assistant used in the production process of polyester as the material are properly selected and the amount of catalyst is reduced as possible; a method in which in the polymerization step and film forming step, the temperature of polyester is controlled so as not to be overheating thereof and the melting time of polyester is controlled so as not to be overtime; a method in which the blending amount of reclaimed material is reduced as possible; or the like.

In the polyester film according to the present invention, the total amount of the oligomers (cyclic trimer) precipitated on both surfaces of the polyester film when heat-treating the film at 180°C for 10 min is preferably not more than 15 mg/m², more preferably not more than 10 mg/m², especially preferably not more than 8 mg/m². When the total amount of the oligomers precipitated on the surfaces exceeds 15 mg/m², there tend to arise such problems that the film transparency is deteriorated because of precipitation of oligomers on the surfaces or the precipitated oligomers are dissolved into a functional layer provided on the polyester film thereby affecting the properties.

As a method for controlling the content of oligomer precipitated to the film surface by the heat treatment, there are exemplified a method in which the a laminated film comprising at least three layers is produced by using a co-extrusion method and a polyester whose oligomer content is small is used as the material of outermost layer constituting the surface layer; and a method in which the precipitation of oligomer to the film surface is prevented by providing a coating layer by in-line/off-line coating.

In the film according to the present invention, a laminate structure can be provided by use of co-extrusion method. In this case, it is preferred that the thickness of outermost layer in only one side thickness is usually not less than 3 µm and not more than 1/4 of total thickness of film. When the said thickness is less than 3 µm, there is a possibility that an oligomer (cyclic trimer) contained in the inner layer is precipitated onto the film surface by the thermal history during the processing to contaminate the production line and increase the foreign matter content on the film surface. On the other hand, when the said thickness is more than 1/4 of total thickness of film, there is a possibility that the content of particles blended into the outermost layer is too large so that the film transparency is deteriorated. On the other hand, in case of single layer structure, it is preferred to contain no particle into the film as possible but to contain particles into the coating layers on both film surfaces.

In case where the film according to the present invention is the said laminated film, it is required that the content of third component contained in the film totally based on the amount of polyester in the film totally is within the above range. To prevent the optical unevenness of film as the subject to be solved in the present invention relates to the transmitted light in the film, that is relates to the total properties of film, and not to the optical unevenness of only film surface portion or film inside portion.

Further, in case of adding the above additives such as UV absorbers, dyes, or the like, these are preferably blended into an intermediate layer in the laminated film.

The number of foreign materials having maximum size of not less than 150 µm present in the polyester film according to the present invention is usually 0.0 number/m² (less than 0.05 number/m²) and the number of foreign materials having maximum size of not less than 30 µm present in the polyester film according to the present invention is usually 1.5 number/m², preferably 1.0 number/m². When the above conditions that number of foreign materials having maximum size of not less than 150 µm is 0.0 number/m² or the number of foreign materials having maximum size of not less than 30 µm is 1.5 number/m² are not satisfied, these may cause a generation of image failure when using for materials of LCD or PDP resulting quality deterioration thereof. Further, it is preferred that the number of scratch having a width of not less than 10 µm present in the polyester film surface is not more than 10 number/m², more preferably not more than 5 number/m². When the number of scratch having a width of not less than 10 µm present in the polyester film surface is more than 10 number/m², this may cause a generation of image failure of LCD or PDP resulting quality deterioration thereof. As the methods for attaining the above conditions, there are exemplified a method preventing from the incorporation of foreign materials at the production stage of polyester materials and film, a method of removing foreign materials by using a high-precision filter, or the like. Further, in order to prevent from generation of scratch, there is required means for reducing the unevenness of film speed at contacting to each roll in the stretching step and film winding step and preventing from introduction of foreign materials between the roll and film.

The obtained film from the above according to the present invention is used for various optical applications. In these applications, it is preferred that unevenness of optical properties of film caused by the polymer orientation and unevenness of film thickness. Concretely, the difference between the maximum in-plain retardation and the minimum in-plain retardation of polyester film measured by the method described hereinafter is usually not more than 200 nm, preferably not more than 100 nm, more preferably not more than 50 nm. In case of satisfying this condition, excellent uniformity of image sharpness and brightness when using for optical applications can be attained.

Next, the process for producing the film according to the present invention is explained in detail below. However, the production process is only illustrative and not intended to limit the scope of the present invention. First, by a known method, dried or undried polyester chip is fed into a melt-extrusion apparatus and heated to a temperature not lower than a melting point of the polyester for melting the polyester chips. In case of using plural copolyester(s) and homopolyester(s), the melting temperature is not lower than the melting point of each polymer. Then, the thus obtained molten polymer is extruded through a die on a rotary cooling drum and rapidly cooled and solidified thereon to a temperature not higher than a glass transition temperature thereof, thereby obtaining a substantially amorphous unstretched sheet. In this case, in order to improve a flatness of the obtained sheet, it is preferred to enhance adhesion between the sheet and the rotary cooling drum. For this purpose, in the present invention, an electrostatic adhesion method and/or a liquid coating adhesion method are preferably used.

In the present invention, the thus obtained sheet is biaxially stretched to form a stretched film. More specifically, the stretching procedure may be conducted under the following conditions. That is, the unstretched sheet is preferably stretched in a longitudinal direction thereof at a temperature of 70 to 145°C and a stretch ratio of 2 to 6 times to form a longitudinally uniaxially stretched film, and then the uniaxially stretched film is preferably stretched in a transverse direction thereof at a temperature of 90 to 160°C and a stretch ratio of 2 to 6 times to form a biaxially stretched film. The resultant biaxailly stretched film is further heat-treated at a temperature of 150 to 240°C for 1 to 600 sec. Further, upon the heat treatment, in a maximum heat-treating temperature zone and/or a cooling zone located at an exit of the heat-treating apparatus, the film is preferably subjected to relaxation by 0.1 to 20% in longitudinal and/or transverse directions thereof. In addition, if required, the thus obtained film may be subjected again to longitudinal and transverse re-stretching steps.

In the present invention the above laminated film comprising two or three or more layers can be produced by use of two or three or more melt-extruders for polyester so-called "co-extrusion method". The layer structure of film is A/B structure or A/B/A structure using an A material and B material, A/B/C structure using an A material, B material and C material, and other structures. For example, a film having A/B structure or A/B/A structure can be produced by using an A material containing a specific particle to design the film surface structure and a B material containing no particle. In this case, since the material for the B layer can be selected with no limitation, the cost performance thereof is excellent. Further, although a reclaimed material of the said film is blended into the B layer, the surface roughness can be designed by controlling the A layer as the surface layer so that the cost performance is more excellent.

Especially, the film according to the present invention is used for optical applications, usually a hard coat layer, antireflective layer, anti-glare layer, or a vapor deposited layer is provided. Therefore, in order to improve the coating suitability and adhesion in forming these layers, or in order to prevent electrostatic charge so as to keep the film surface clean, a coating layer as an under coating layer may be provided. As a method for forming the under coating layer, a method in which the under coating layer is formed in the film production process, especially after the stretching in the longitudinal direction and before the stretching in transverse direction is preferred because an extremely thin coating can be formed, and drying the coating material and curing thereof can be conducted in the film production process. The coating layer preferably comprises a combination of crosslinking agent and various binder resins. As the binder resin, usually a polymer selected from the group consisting of polyesters, acrylic-based polymers and polyurethanes in view of adhesiveness. The above mentioned polymers include derivatives thereof. The derivatives mean copolymers with other monomer(s) and polymers whose functional group(s) are reacted with reactive compound(s).

If required, a coating may be conducted by an off-line coating method after production of the film. This coating may be conducted on either one or both surfaces of the film. The coating material used in the off-line coating method may be either a water-based material or a solvent-based material, whereas the coating material used in the in-line coating method is preferably a water-based material or a water dispersion-based material.

The film according to the present invention is used for optical applications. Therefore, it is preferred to form a functional thin multilayer coat for the purpose of adhesion improvement as well as preventing from reflection of outside light, dust adhesion by static electricity, and also shielding electromagnetic wave.

In the above polyesters, acryl-based polymers and polyurethanes as used for the coating material, the glass transition temperature (Tg) thereof is preferably not lower than 0°C, more preferably not lower than 40°C. Of these coating materials, polyurethane is preferred and polyester polyurethane is more preferred. Further, polyester polyurethane in which carboxylic residues are present and partial carboxylic residues are modified with amine or ammonia to impart the water soluble property is especially preferred.

As the crosslinking agent resin, there are exemplified melamine-based resins, epoxy-based resins and oxazoline-based resins. Of these, melamine-based resins are especially preferred in view of coating suitability and adhesion durability. As the melamine-based resins, condensation compounds comprising monomers, condensation compounds comprising an oligomer formed with two or more monomers and a mixture thereof are mentioned.

In the present invention, in order to improve slipness and sticking property, it is preferred to contain inorganic particles or organic particles in the coating layer. The blending amount of such particles in the coating material is usually 0.5 to 10% by weight, preferably 1 to 5% by weight. When the blending amount of particles is less than 0.5% by weight, the improvement of anti-blocking property may be insufficient. On the other hand, when the blending amount of particles exceeds 10% by weight, the transparency of film is deteriorated so that the image sharpness may be deteriorated.

As the inorganic particles, there are exemplified silicone dioxide, alumina, zirconium oxide, kaolin, talc, calcium carbonate, titanium oxide, barium oxide, carbon black, molybdenum sulfide, antimony oxide, or the like. Of these, silicone dioxide is useful because it is low cost and there are various particles having various sizes. As the organic particles, there are exemplified polystyrene particles and polyacrylate polymethacrylate particles which have a crosslinked structure by use of a compound having two or more carbon-carbon double bonds in one molecule such as divinylbenzene.

The above inorganic particles and organic particles may be surface treated. As the surface treatment agents, there are exemplified surfactants, polymers as a dispersant, silane coupling agents, titanium coupling agents, or the like. The particle content in the coating layer is usually not more than 10% by weight, preferably not more than 5% by weight in view of no adverse effect to the film transparency.

The above coating layer may contain antistatic agents, defoaming agents, coating suitability improvers, thickeners, antioxidants, UV absorbers, foaming agents, dyes, pigments, or the like.

In order to improve the dispersibility to water or film forming ability, the above coating material may contain a small amount of organic solvent as long as water is a main medium. The organic solvent is used within such amount that it is soluble in water. As the concrete examples of organic solvent, there are mentioned aliphatic or alicyclic alcohols such as n-butyl alcohol, n-propyl alcohol, isopropyl alcohol, ethyl alcohol and methyl alcohol; glycols such as propylene glycol, ethyleneglycol and diethyleneglycol; glycol derivatives such as n-butyl cellosolve, ethyl cellosolve cellosolve, methyl cellosolve and propylene glycol monomethyl ether; ethers such as dioxane and tetrahydrofuran; esters such as ethyl acetate and amyl acetate; ketones such as methylethyl ketone and acetone; and amides such as N-methyl pyrrolidone. Two or more organic solvents may be used in combination, if required.

As the coating method of coating material, various known coating techniques such as shown in Y. Harasaki: Coating Systems, Maki Shoten, 1979 can be used. Specifically, such coating devices as reverse roll coater, gravure coater, rod coater, air doctor coater, and the other coating devices than these can be used.

The coating layer may be formed on one surface of polyester film or both surfaces of polyester film. In case of forming a coating layer on one surface, the other coating layer may be formed on the opposite surface in order to impart the other property different from the property of former coating layer. Incidentally, in order to improve the coating suitability and adhesiveness of coating material to the film, the film may be subject to chemical treatment or discharge treatment before coating. Further, in order to further improve the surface property, the film may be subject to discharge treatment after forming the coating layer.

The thickness of coating layer as the finally dried coating layer thickness is usually 0.01 to 0.5 µm, preferably 0.015 to 0.3 µm. When the thickness of coating layer is less than 0.01 µm, the effect by the provided coating layer may be insufficient. When the thickness of coating layer exceeds to 0.5 µm, film is liable to stick each other, especially, in case where the coated film is stretched again for enhancing the film strength, the film is liable to stick to the rolls in each film production step. In case where the same coating layers are formed on both surface of film, the above sticking problem is remarkable.

When using the above coated film for optical applications, a coating spot in the coating layer becomes a problem in case of further providing antireflecting layer on the coating layer. The reason for forming the coating spot is not clearly known, but the reason is presumed that coarse projections are formed by foreign matters present in the film, they become a core so that the coating material is repealed and the repealed portion is stretched to form a coating spot, or an oligomer or dust attached to the film surface become a core and the coating material is repealed at the core portion to form a coating spot. Therefore, it is preferred to produce the film under such a condition that the dust and foreign matter capable of forming the core are removed as possible. Since the oligomer attached or precipitated on the film surface also belongs to the foreign matter, it is effective for reducing the coating spot to reduce the content of oligomer contained in the film.

In case where thus obtained film according to the present invention has the coating layer, the number of coating spot (N) per 30 m² is usually 0 to 20, preferably 0 to 10, more preferably 0 to 3. Since the higher properties in the art of optical film will be required more and more, it is preferred to close the number of coating spot to zero.

The optical biaxially oriented polyester film according to the present invention is preferably used for substances requiring high level transparency. As concrete examples of materials using thereof, in case of using for a liquid-crystal display, there are mentioned reflective plates, diffuser sheets, prism sheets, lens sheets, films for brightness improvement, or the like; in case of using in a step for a panel production, there are mentioned release films, or the like; in case of using for a plasma display, there are mentioned film substances having such functions as shield of electro magnetic wave, shield of near infrared ray, color tone correction, shield of ultraviolet ray and antireflection, which substances are used for materials of so-called a PDP filter; and in case of using in the step for a panel production or for a projection television, there are mentioned a screen for image-forming, or the like.

### EXAMPLES

The present invention is described in more detail by Examples. However, these Examples are only illustrative and not intended to limit the scope of the present invention. The methods for measuring various properties which are used in the present invention are as follows.

### (1) Measurement of intrinsic viscosity of polyester:

One gram of a polyester from which other polymer components incompatible with the polyester and pigments were removed, was accurately weighed, and mixed with and dissolved in 100 mL of a mixed solvent of phenol and tetrachloroethane at a weight ratio of 50:50, and a viscosity of the resultant solution was measured at 30°C.

### (2) Measurement of third component content (copolymerized component):

A resin sample was dissolved in a mixed solvent of deuterated chloroform/hexafluoroisopropanol at a weight ratio of 7:3 to prepare 3% by weight solution. By using a nuclear magnetic resonance (JNM-EX270 type, manufactured by JEOL Ltd.), a ¹H-NMR spectrum of the above prepared solution was obtained. Spectral assignment for each peak was conducted and the third component content was calculated with the integration value of each peak.

### (3) Measurement of average particle size (d₅₀ (µm)):

An equal sphere distribution was measured by using a centrifugal precipitation type particle size distribution measuring apparatus "SA-CP3 Model" manufactured by Shimadzu Corporation, and 50% value of integration (based on weight) was determined as the average particle size.

### (4) Film haze:

The polyester film was subjected to measurement of a film haze thereof using an integrating sphere turbidity meter "NDH-300A" manufactured by Nippon Denshoku Kogyo Co., Ltd., according to JIS K7105.

### (5) b* value:

By using a TC-1800MKII type color analyzer manufactured by Tokyo Denshoku Co., Ltd., the color tone was measured according to JIS z-8722.

### (6) Measurement of coating spot number:

The surface of film having a size of width: 1500 mm, length 20 m (area: 30 m²) was exposed to light by a halogen lamp. The film surface was visually observed and the number of coating spot having a size of 0.5 mm or more was counted. Although in the present Examples, the number of coating defect having a width of 10 mm or more in the lengthy sample was counted, the number can be presumed by counting the number in a film cut to A4 size.

### (7) Optical material suitability:

The properties of film was evaluated as use of a light diffuser sheet which is a typical optical material. Namely, a light diffusion layer was formed by applying a coating material comprising an acryl-based binder and particles on one surface of film. The obtained light diffuser sheet is incorporated into a backlight unit and the quality of planer luminescence is evaluated by the following views.

### [1] Brightness level:

Brightness level was evaluated by use of a brightness photometer and by comparing that of known PET film, namely the film used in Comparative Example 1 of the present invention.

**Table 1**

| | |
|---|---|
| Rank A | Brightness is improved for 3% or more and a remarkably improvement can be recognized. |
| Rank B | Brightness is improved for 1% or more and an improvement can be recognized. |
| Rank C | Improvement of Brightness cannot be recognized or deteriorates. |

### [2] Brightness unevenness:

**Table 2**

| | |
|---|---|
| Rank A | Brightness unevenness is hardly observed. |
| Rank B | Small brightness unevenness is observed but there is no problem in practical use. |
| Rank C | Significant brightness unevenness is observed and this will affect the image of liquid-crystal display. |

The production processes of polyesters used in Examples and Comparative Examples are explained below.

### (1) Production of polyester (A)

100 parts by weight of dimethyl terephthalate and 60 parts by weight of ethyleneglycol as starting materials were charged together with 0.09 parts by weight of magnesium acetate tetrahydrate as a catalyst into a reactor, and the reaction therebetween was initiated at 150°C. The reaction temperature was gradually raised while distilling off methanol produced, and allowed to reach 230°C after 3 hr. After 4 hr, the transesterification reaction was substantially terminated. After addition of 0.05 parts by weight of ethyl acid phosphate into the above obtained reaction mixture, 0.03 parts by weight of antimony trioxide was further added thereinto and polycondensation reaction was conducted for 4 hr. More specifically, the reaction temperature was gradually raised from 230°C until reaching 280°C. On the other hand, the reaction pressure was gradually reduced from normal pressure until finally reaching 0.3 mmHg. After initiation of the reaction, a change in agitation power in the reaction vessel was continuously monitored, and the reaction was terminated at the time at which it was recognized from the change in agitation power that a viscosity of the reaction solution reached the value corresponding to an intrinsic viscosity of 0.68. The resultant polymer was discharged under a nitrogen pressure from the reaction vessel, thereby obtaining a polyester (A). The thus obtained polyester (A) had an intrinsic viscosity of 0.68 and diethyleneglycol content of 1.0 mol%.

### (2) Production of polyester (B)

The same procedure as defined in <Production of polyester (A)> was conducted except that after addition of 0.04 parts by weight of ethyl acid phosphate thereinto, 0.4 parts by weight of silica particles having an average particle diameter of 2.2 µm dispersed in ethyleneglycol and 0.03 parts by weight of antimony trioxide were further added thereinto and the polycondensation reaction was terminated at the time at which it was recognized from the change in agitation power that a viscosity of the reaction solution reached the value corresponding to an intrinsic viscosity of 0.66, thereby obtaining a polyester (B). The thus obtained polyester (B) had an intrinsic viscosity of 0.66 and diethyleneglycol content of 1.0 mol%.

### (3) Production of polyester (C)

The same procedure as defined in <Production of polyester (A)> was conducted except that the starting materials were changed to 100 parts by weight of dimethyl terephthalate, 60 parts by weight of ethyleneglycol and 2 parts by weight of diethyleneglycol and used catalyst was changed to germanium dioxide, thereby obtaining a polyester (C). As the addition method of germanium dioxide, a known method was used and the addition amount was 10 ppm as germanium atom based on the weight of materials. The thus obtained polyester (C) had an intrinsic viscosity of 0.68 and diethyleneglycol content of 4.0 mol%.

### (4) Production of polyester (D)

100 parts by weight of dimethyl terephthalate, 54 parts by weight of ethyleneglycol and 25 parts by weight of 1,4-cyvlohexane dimethanol as starting materials were charged together with 0.011 parts by weight of tetrabutoxy titanate as a catalyst into a reactor, and the reaction therebetween was initiated at 150°C. The reaction temperature was gradually raised while distilling off methanol produced, and allowed to reach 230°C after 3 hr, and further the reaction was continued for one hour. The reaction temperature was gradually raised from 230°C until reaching 280°C. On the other hand, the reaction pressure was gradually reduced from normal pressure until finally reaching 0.3 mmHg. After initiation of the reaction, a change in agitation power in the reaction vessel was continuously monitored, and the reaction was terminated at the time at which it was recognized from the change in agitation power that a viscosity of the reaction solution reached the value corresponding to an intrinsic viscosity of 0.70. The resultant polymer was discharged under a nitrogen pressure from the reaction vessel, thereby obtaining a polyester (D). The thus obtained polyester (D) had an intrinsic viscosity of 0.70 and diethyleneglycol content of 1.0 mol%.

### (5) Production of polyester (E)

The same procedure as defined in <Production of polyester (A)> was conducted except that 80 parts by weight of dimethyl terephthalate and 20 parts by weight of isophthalic acid were used as the starting dicarboxyl acid material, thereby obtaining a polyester (E). The thus obtained polyester (E) had an intrinsic viscosity of 0.67 and diethyleneglycol content of 1.0 mol%.

### Example 1:

A raw mixture material for the layer A obtained by blending 12 parts by weight of the polyester (B) and 88 parts by weight of the polyester (C) with each other, and raw material for the layer B comprising 100% of the polyester (C) were fed into two vented twin extruders, respectively. Each material was melted at 285°C, coextruded from each die onto a cooling roll whose surface was controlled to a temperature of 40°C, by an electrostatic adhesion method, and cooled and solidified thereon, thereby obtaining an unstretched sheet. The co-extrusion was conducted by such a manner that the layer structure of sheet was two kinds-three layers structure (A/B/A), namely, the layer A was an outer layer (surface layer) and the layer B was an intermediate layer. Next, the thus obtained unstretched sheet was stretched at a film temperature of 81°C and a stretch ratio of 3.3 times in a longitudinal direction thereof by use of difference of roll rotation speed; coated with a coating material having a composition shown below; then introduced into a tenter where the sheet was further stretched at 120°C and a stretch ratio of 3.6 times in a lateral direction thereof; heat-treated at 225°C; and further subjected to relaxation by 2% in the lateral direction, thereby obtaining a laminate polyester film having a thickness of 188 µm. The thickness of each layer of obtained laminate film was 10/168/10 (µm). The thickness of coating layer was 0.08 µm.

The composition of a/b/c/d in the coating material (weight ratio) was 47/20/30/3. In the composition, "a" is a dispersion of polyester comprising terephthalic acid/isophthalic acid/ 5-sodium sulfoisophthalic acid/ethyleneglycol/ diethyleneglycol/ triethyleneglycol= 31/16/3/22/21 (molar ratio), "b" is a polymer obtained by emulsion polymerization of methylmethacrylate/ethylacrylate/ acrylonitrile/ N-methylol methacrylamide= 45/45/5/5 (molar ratio) (emulsifier: anion-based surfactant), "c" is hexamethoxy methylmelamine (melamine-based crosslinking agent), and "d" is a aqueous dispersion of silicon dioxide having a particle size of 0.06 µm (inorganic particle). The solid concentration in the coating material was 6% by weight.

### Example 2:

The same procedure as defined in Example 1 was conducted except that a mixture of 4% by weight of polyester (B) and 96% by weight of polyester (C) was used as the material of layer (B) and each layer thickness was changed to 10/105/10 (µm) under the same film forming condition and coating condition as defined in Example 1, thereby obtaining a laminate polyester film having a thickness of 125 µm.

### Example 3:

The same procedure as defined in Example 1 was conducted except that a mixture of 5% by weight of polyester (D) and 95% by weight of polyester (C) was used as the material of layer (B) and a mixture of 12% by weight of polyester (B), 83% by weight of polyester (C) and 5% by weight of polyester (D) was used as the material of layer (A), thereby obtaining a laminate polyester film having a thickness of 188 µm.

### Example 4:

The same procedure as defined in Example 1 was conducted except that a mixture of 10% by weight of polyester (E) and 90% by weight of polyester (C) was used as the material of layer (B) and a mixture of 12% by weight of polyester (B), 78% by weight of polyester (C) and 10% by weight of polyester (E) was used as the material of layer (A), thereby obtaining a laminate polyester film having a thickness of 188 µm.

### Example 5:

In the production of polyester (C), the feed amount of diethyleneglycol as the glycol component was increased to obtain a polyester having a diethyleneglycol content of 6 mol%. The same procedure as defined in Example 1 was conducted except that the above obtained polyester having a diethyleneglycol content of 6 mol% was used instead of polyester (C), thereby obtaining a laminate polyester film having a thickness of 188 µm. In case where the diethyleneglycol content was increased, the thermal stability of polyester was slightly deteriorated and the b* value of the obtained film was slightly increased.

### Example 6:

The same procedure as defined in Example 1 was conducted except that in the coating step after stretching, the solid content in the coating material was changed to 3% by weight (half of the content in Example 1), thereby obtaining a laminate polyester film having a thickness of 188 µm. In the coating layer of obtained film, coating spots were slightly observed thereby the properties as the optical material being slightly deteriorated.

### Comparative Example 1:

The same procedure as defined in Example 1 was conducted except that a mixture of 12% by weight of polyester (B) and 88% by weight of polyester (A) was used as the material of layer (A) and 100% by weight of polyester (A) was used as the material of layer (B), thereby obtaining a laminate polyester film having a thickness of 188 µm.

### Comparative Example 2:

The same procedure as defined in Example 3 was conducted except that a mixture of 35% by weight of polyester (D) and 65% by weight of polyester (C) was used as the material of layer (A) and a mixture of 12% by weight of polyester (B), 53% by weight of polyester (C) and 35% by weight of polyester (D) was used as the material of layer (B), thereby obtaining a laminate polyester film having a thickness of 188 µm. Since the content of third component in the obtained film was too large, the film properties in case of using for optical applications were deteriorated, also thermal resistance was deteriorated. Further, maintenance of the film surface flatness at the practical use was insufficient.

### Comparative Example 3:

By using a mixture of 10% by weight of polyester (B) and 90% by weight of polyester (C) as a material, single layer polyester film was prepared by use of one extruder. As the film production condition, the same procedure as defined in Example 1 was used except that the film structure was changed to single layer structure, thereby obtaining a laminate polyester film having a thickness of 188 µm.

The properties and suitability for optical materials in the above obtained films are collectively shown in Table 3. It can be clearly understood that the films satisfying the requirements according to the present invention have high suitability for optical applications.

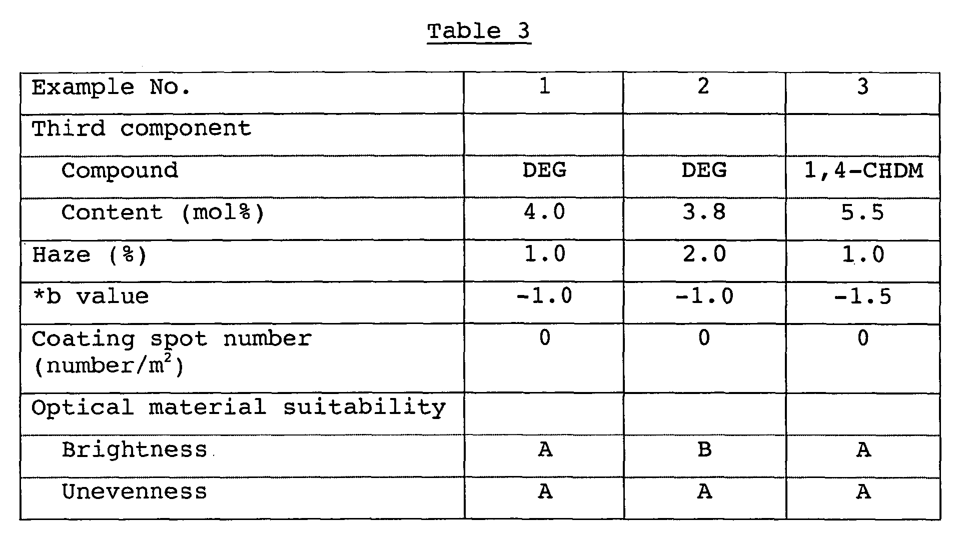

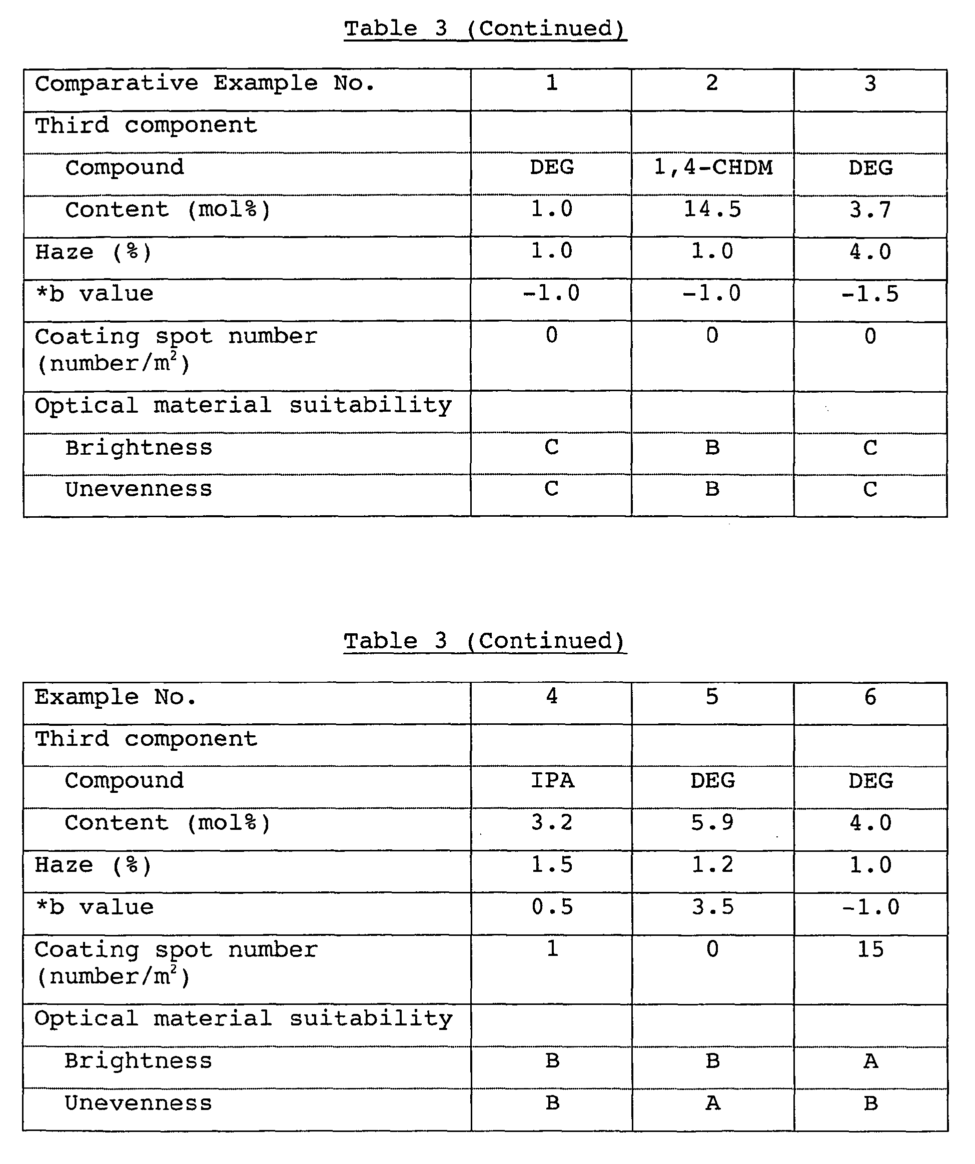

In the above Table 3, DEG, 1,4-CHDM and IPA mean diethyleneglycol, 1,4-cyclohexane dimethanol and isophthalic acid, respectively. In Example 3, Example 4 and Comparative Example 2, the content of third component is the content including the amount of DEG.

Although the present invention is described above with respect to embodiments which are considered to be most practical and preferable at the present time, the present invention is not limited to these embodiments, and various changes and modifications will be appropriately made within the scope of claims and a whole of a specification of this application unless departing from the subject matter and concept of the present invention, and it should be construed that these changes and modifications are involved in the technical range of the present invention. Meanwhile, the present patent application is based on Japanese Patent Application No. 2004-367481 filed on December 20, 2004, whole contents of which are incorporated herein by reference.

### INDUSTRIAL APPLICABILITY

The film according to the present invention is suitably applicable for various optical elements used for liquid crystal displays, plasma displays, or the like, or applicable for a protective film and release film used for production processes of products in optical arts.

## Claims

1. An optical biaxially oriented polyester film comprising a polyester comprising a main component and at least one other component which is a third component in a total amount of 2.0 to 10.0 mol%, which polyester film has a film haze of 0 to 3.0%.

2. An optical biaxially oriented polyester film according to claim 1, wherein the main component is obtained by polycondensing an aromatic dicarboxylic acid with an aliphatic glycol, the aromatic dicarboxylic acid is selected from the group consisting of terephthalic acid and 2,4-naphthalenedicarboxylic acid, and the aliphatic glycol is selected from the group consisting of ethyleneglycol, diethyleneglycol and 1,4-cyclohexane dimethanol.

3. An optical biaxially oriented polyester film according to claim 1 or 2, wherein the polyester comprises a copolyester comprising the main component and the third component.

4. An optical biaxially oriented polyester film according to any one of claims 1 to 3, wherein a glycol component in the third component is selected from the group consisting of ethyleneglycol, diethyleneglycol and 1,4-cyclohexane dimethanol.

5. An optical biaxially oriented polyester film according to any one of claims 1 to 4, wherein b* value of color tone measured according to the light transmission method with one film is -5 to +3.

6. An optical biaxially oriented polyester film according to any one of claims 1 to 5, wherein the total amount of the oligomers precipitated on both surfaces of the polyester film when heat-treating the film at 180°C for 10 min is not more than 15 mg/m².

7. An optical biaxially oriented polyester film according to any one of claims 1 to 6, wherein the number of foreign materials having maximum size of not less than 150 µm and present in the polyester film is 0.0 number/m² and the number of foreign materials having maximum size of not less than 30 µm and present in the polyester film is 1.5 number/m².

8. An optical biaxially oriented polyester film according to any one of claims 1 to 7, wherein the number of scratch having a width of not less than 10 µm and present in the polyester film surface is not more than 10 number/m².

9. An optical biaxially oriented polyester film according to any one of claims 1 to 8, wherein a difference between the maximum in-plain retardation and the minimum in-plain retardation of polyester film is not more than 200 nm.

10. An optical biaxially oriented polyester film according to any one of claims 1 to 9, further comprising coating layer(s) on one surface or both surfaces thereof.

11. An optical biaxially oriented polyester film according to claim 10, wherein the number of coating spot (N) per 30 m² of film is 0 to 20.
